# EUROPEAN PATENT SPECIFICATION

(11) **EP 1 334 007 B1**
(45) Date of publication and mention of the grant of the patent: **11.06.2008**
(21) Application number: 01976992.6
(22) Date of filing: 16.10.2001
(51) Int. Cl.: B60R 1/00, G02B 27/01

(54) **A NIGHT VISION ARRANGEMENT**
NACHTSICHTANORDNUNG
SYSTEME POUR LA VISION DE NUIT

(30) Priority: 26.10.2000 SE 0003942
(43) Date of publication of application: 13.08.2003
(73) Proprietor: AUTOLIV DEVELOPMENT AB, 447 83 Vargarda (SE); FLIR Systems, Inc, Portland, OR 97224 (US)
(72) Inventor: KÄLLHAMMER, Jan-Erik, S-417 64 Göteborg (SE); ERIKSSON, Dick, S-441 35 Alingsas (SE); KARLSSON, Lars, S-183 41 Täby (SE); STRÅÅT, Staffan, S-182 46 Enebyberg (SE)
(74) Representative: Parry, Simon James
(86) International application number: PCT/SE2001/002253
(87) International publication number: WO 2002/034572

(56) References cited:
- EP-A1- 0 455 524
- EP-A1- 0 686 865
- EP-A2- 0 677 955
- EP-A2- 0 758 834
- WO-A2-01/46739
- DE-A1- 3 942 249
- GB-A- 1 142 910

## Description

**THE PRESENT INVENTION** relates to a night vision arrangement in the form of a device for the enhancement of night vision of a vehicle, such as an automobile.

It has been proposed previously to provide a night vision arrangement in an automobile. US-A-5,414,439 discloses an arrangement in which a vehicle is equipped with an infra-red sensitive camera which is directed to capture an image of the roadway in front of the vehicle. The camera provides an output in the form of a video signal which is processed by a video processor, and which is then passed to a head-up display. It has been known previously to provide head-up display units in vehicles such as combat aircraft to enable the pilots of the aircraft to view, simultaneously, the scene on the exterior of the aircraft, and also an image projected on to the head-up display. US-A-5,414,439 utilises a head-up display of this general type to enable the driver of the vehicle to view the road in front of the vehicle and, simultaneously, to see an image derived from the infra-red camera.

In the arrangement of US-A-,5,414,439, the windshield is provided with a semi-transparent mirror which is utilised as a combiner to combine the real image of the road in front of the vehicle as viewed by the driver, and a virtual image of the road ahead.

The infra-red sensitive camera of US-A-5,414,439 is of conventional design incorporating a lens arrangement which serves to focus an image on a relatively large sensor element which is located in alignment with the optical axis of the lens arrangement. The entire camera is rather bulky and the positioning of the camera is shown, schematically, with the camera being mounted within the engine compartment of the vehicle.

GB1142910 discloses the features of the preamble of claim 1 and describes an apparatus for improving the visibility of the roadway in front of Motor Vehicles. A television camera is provided mounted within the engine bay of a motorcar at the front of the motorcar behind the radiator screen. A video signal from the camera is passed to an image display device located inside the motorcar so that the driver is able to see the image captured by the television camera.

The present invention seeks to provide an improved night vision arrangement.

According to this invention there is provided on a vehicle a night vision arrangement, the night vision arrangement incorporating a camera, the camera comprising a lens, and an infra-red sensor to capture an image received through the lens, there being a display unit to display the captured image to a driver of the vehicle, wherein the lens defines an optical axis, and within the camera a beam deflector is provided in alignment with the optical axis adapted to deflect the beam received through the lens and to direct the deflected beam on to the infra-red sensor, part of the camera containing the sensor being mounted within the main envelope of the vehicle, with the lens when in an operative position being positioned beyond said envelope.

Preferably, the beam deflector is adapted to deflect the beam through approximately 90°.

Advantageously, the beam deflector comprises a mirror.

Conveniently, means are provided to heat the lens of the camera.

Preferably, means are provided to protect the lens from the environment.

Advantageously, the means provided to protect the lens from the environment comprise a cover movable to a position in which the lens is covered.

Conveniently, the means to protect the lens comprise means to move the camera and the lens so that the lens is in a retracted and protected position.

Preferably, the camera is mounted in position for pivotal movement about a horizontal axis parallel with the axis of the vehicle between an operative position and a retracted position.

Advantageously, the camera is incorporated into a mirror housing.

Conveniently, the camera is mounted in a fender or bumper.

Preferably, the camera is mounted to be moved vertically between an operative position and a retracted position.

Advantageously, the camera is provided with a cover movable between a retracted position in which the lens is exposed and a closed position in which the lens is covered.

Conveniently, the camera is adapted to be mounted on the roof of a vehicle.

Preferably, the camera is incorporated in a roof mounted aerial.

Advantageously, the camera is incorporated in a roof rail.

Conveniently, the camera is mounted on the vehicle to view the roadway in front of the vehicle.

Preferably, a processing unit is provided which is configured to process a video signal generated by the infra-red sensor and to pass the processed video signal to the display unit.

Advantageously, the lens is mounted on an elongated neck portion of the arrangement.

In order that the invention may be more readily understood, and so that further features thereof may be appreciated, the invention will now be described by way of example, with reference to the accompanying drawings in which:
FIGURE 1 is a schematic illustration of a night vision arrangement for a motor vehicle in accordance with the invention,
FIGURE 2 is a view similar to that of Figure 1 illustrating a modified embodiment of the invention,
FIGURE 3 is a diagrammatic side view illustrating a camera of one embodiment of the invention mounted in position on a motor vehicle,
FIGURE 4 is a front view of the camera of Figure 3 in the operative position,
FIGURE 5 is a front view corresponding to Figure 4 illustrating the camera of Figure 3 in a non-operative position,
FIGURE 6 is diagrammatic view illustrating a camera of another embodiment of the invention,
FIGURE 7 is a diagrammatic view illustrating the camera of yet another embodiment of the invention,
FIGURE 8 is a diagrammatic side view illustrating the camera of a further embodiment of the invention,
FIGURE 9 is a diagrammatic side view of part of a motor vehicle provided with a camera forming part of the embodiment of the invention,
FIGURE 10 is an enlarged view of part of Figure 9, and
FIGURE 11 is a side view of part of a vehicle provided with a camera forming part of yet another embodiment of an invention.

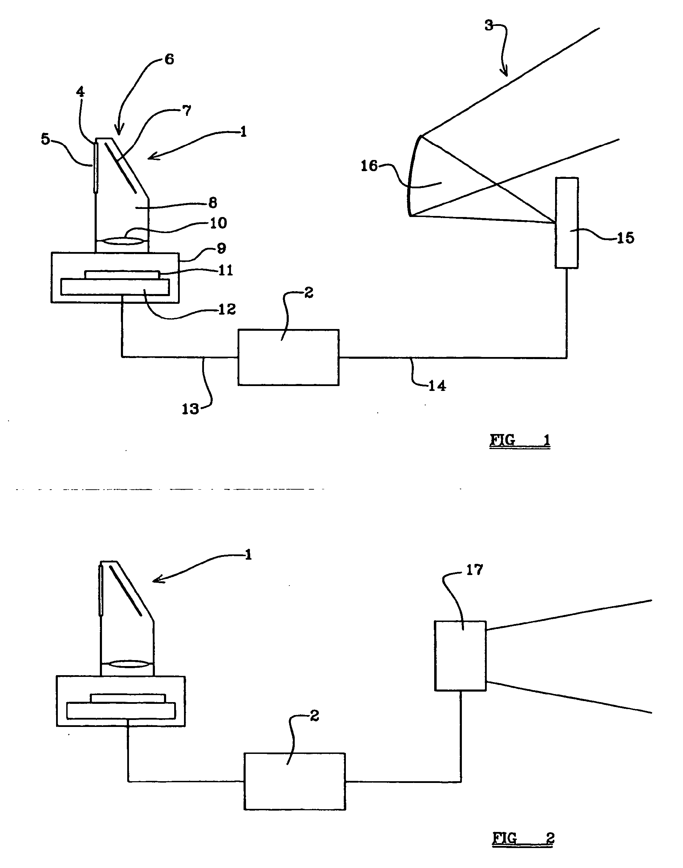

Referring initially to Figure 1 of the accompanying drawings, a night vision arrangement for a vehicle such as motor car comprises a camera arrangement 1 to capture an image, a signal processing unit 2 and a display arrangement 3 adapted to display an image.

The camera arrangement 1 comprises a lens 4 through which infra-red light, forming an image, is to pass into the interior of the camera. The lens has a front face 5.

The lens 4 defines an optical axis, and, when the camera unit 1 is positioned on a motor vehicle, the optical axis in front of the lens is directed towards the roadway in front of the vehicle, so that the camera can capture an image of the roadway in front of the vehicle.

Behind the lens 4, in alignment with the optical axis, a beam deflector 6 which, in the illustrated embodiment of the invention, is constituted by a mirror 7 which is inclined at substantially 45° to the optical axis of the lens. Thus the beam deflector 6 serves to deflect the beam passing through the lens 4 by approximately 90°.

The beam deflector 6 is connected, by means of an elongate hollow neck 8, to a main housing 9 of the camera 1. Contained within the elongate neck 8 is a focusing lens 10, which serves to focus light from the beam deflector 6 on to a sensor 11 present within the housing 9. The sensor 11 is an infra-red sensor, and may comprise a microbolometer. The sensor may be a charge-coupled device. The sensor is shown mounted on an electronic unit 12 which receives the signals from the sensor and which provides an output on the output lead 13.

It is to be understood, therefore, that the infra-red sensitive camera 2 is provided with a housing 9 which contains an infra-red sensor 11 which is adapted to capture an image, and the housing 9 is connected by means of a hollow neck 8 to a beam deflector 6 which is located adjacent the lens 4.

The output 13 from the camera 1 passes through an image processor unit 2 which provides a signal on a lead 14 which passes to an image generator 15. The image generator 15 may be a cathode ray tube device, or some other equivalent arrangement. The image generator 15 is positioned at an appropriate location generally in front of a combiner 16, which may be mounted on the windshield of a motor vehicle, and which may be a semi-transparent aspheric mirror.

In use of the arrangement, as shown in Figure 1, the camera 1 will be mounted in a motor vehicle so that the optical axis of the lens 4 is directed generally along the roadway in front of the motor vehicle, enabling the camera 1 to generate an infra-red image of the roadway in front of the vehicle. That image is presented on the image generator 15. The driver of the vehicle may thus simultaneously view, in the combiner 16, the real image of the roadway outside the vehicle, and a virtual image of the roadway, as presented on the image generator 15.

Figure 2 illustrates a second embodiment of the invention in which the camera 1 and signal processor 2 are exactly as described above with reference to Figure 1. These components will not be re-described. In this embodiment the output 14 of the signal processing unit 2 is connected directly to a monitor 17, which may be in the form of a cathode ray tube or the like. The monitor 17 is located at a position where it can be viewed by the driver of a motor vehicle.

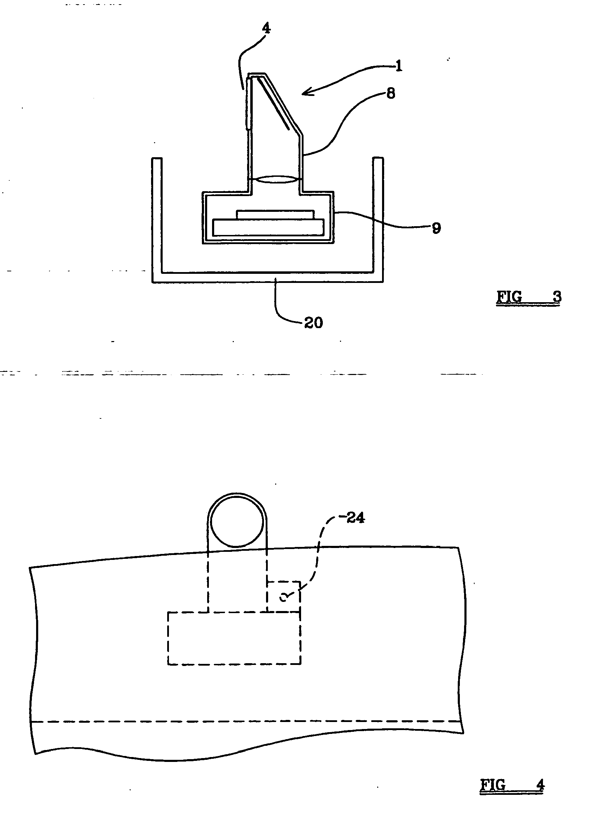

Referring now to Figures 3 to 5, a camera 1, as described above, is illustrated mounted in position on a motor vehicle.

Referring initially to Figure 3, the camera 1 is mounted in position in a recess with the neck 8 extending vertically upwardly, so that the lens 4 has an adequate "view" of the road in front of the vehicle. The main housing 9 is thus located within the main envelope defined by the vehicle, with only that part of the neck 8 carrying the lens 4 projecting beyond the envelope.

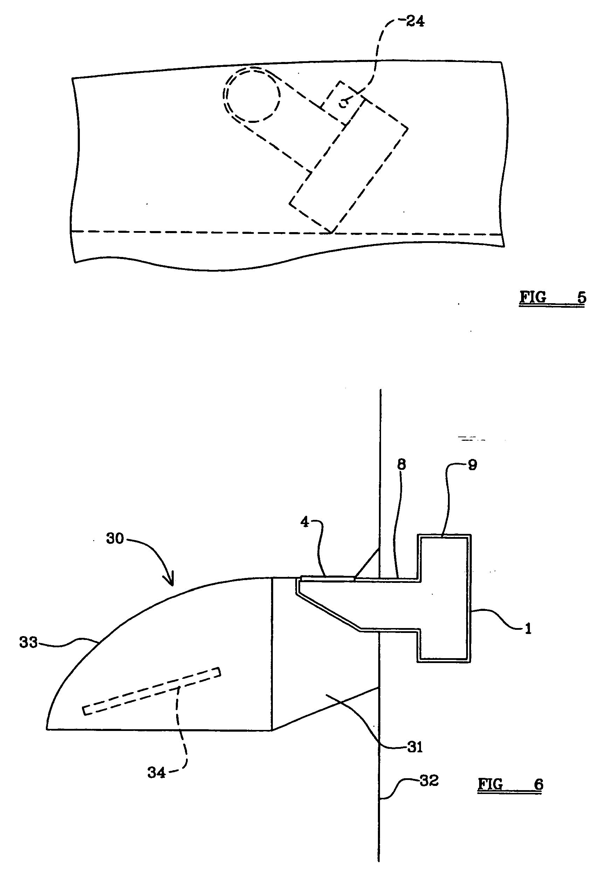

The camera 1 of the embodiment shown in Figures 3 to 5, is mounted in position for pivotal movement about a substantially horizontal pivot axis 21, the pivot axis being aligned with the axis of the vehicle. The entire camera may thus pivot from a first operative position, as shown in Figures 3 and 4, in which the lens 4 projects beyond the envelope of the vehicle, to a retracted position, as shown in Figure 5, in which the lens is within the envelope of the vehicle. The lens, in this retracted position, is somewhat protected from the environment which may contain rain or dust.

It is to be appreciated that in the embodiment of Figures 3 to 5, the main housing 9 of the camera is, at all times, within the envelope of the vehicle, with the lens 4 being movable to the operative position where it extends beyond the envelope of the vehicle. The optical axis of the lens 4, when the camera is in the operative position, is very close to the actual line of sight of the driver of the vehicle, if the camera is positioned immediately in front of the driver. This serves to minimise any parallax error which might otherwise arise.

The camera of the embodiment of Figures 3 to 5 may be driven about the pivot axis 21 by means of an appropriate electric or hydraulic motor. The motor may be controlled so that the camera is only moved to the operative position when the night vision arrangement is actuated.

Figure 6 illustrates another embodiment of the invention in which a camera 1 as described above is mounted in a motor vehicle, with the camera being mounted in position to form part of a wing mirror unit 30. The wing mirror unit 30 has a base portion 31 connected to part 32 of the door of a vehicle, and has an extension portion 33 which contains the actual mirror 34. In this embodiment the camera 1 is mounted in position with the main housing 9 being located within the door, and with the neck 8 extending horizontally into the base portion 31 of the wing mirror unit 30. The lens 4 is positioned in an appropriate aperture formed in the forward facing part of the base portion 31 of the wing mirror unit 30. The camera may easily be mounted in this position as the motor vehicle is fabricated.

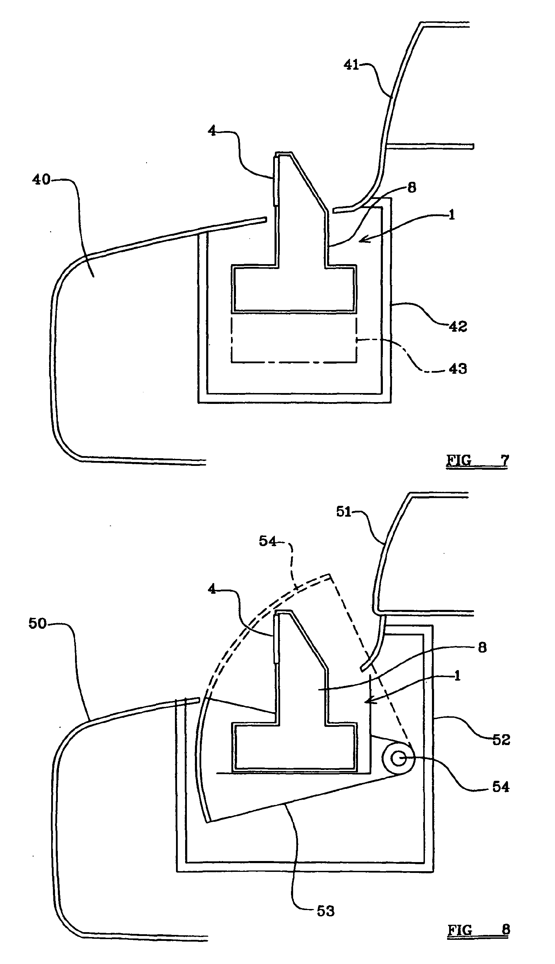

Referring now to Figure 7 of the accompanying drawings, a camera 1 of the type described above is shown mounted in position within the bumper or fender 40 of the motor vehicle. The camera 1 is shown in position beneath a headlight 41. The camera is mounted in position within a recess 42 formed in the bumper or fender with the housing 9 within the envelope of the vehicle. The camera is located in position with the neck 8 extending vertically upwardly so that the lens 4 is positioned immediately above the top surface of the bumper or fender 40. Preferably the camera is positioned immediately in front of the driver in order to minimise any parallax problems. In the illustrated embodiment, the camera may move vertically from an upper or elevated position, as shown in solid line, to a lower or retracted position as shown in dotted lines 43. When the camera is in the lower position the lens is retracted into the recess 42 formed in the bumper or fender 40, thus protecting the lens from the environment.

Figure 8 illustrates a further embodiment in which a camera 1 of the type described above is mounted in position within a bumper or fender 50. Again, the camera 1 is located adjacent a headlight 51. In this embodiment of the invention, the bumper or fender 50 defines a recess 52, and the camera 1 is mounted at a fixed position within the recess 52, with the housing 9 within the envelope of the vehicle. The neck 8 of the camera extends upwardly so that the lens 4 is positioned above the upper edge of the bumper or fender. Mounted within the bumper or fender is a pivotally movable cover 53. The cover 53 is adapted to pivot about a pivot axis 54. The cover may move from a retracted position, as shown in solid lines in Figure 8, in which the lens 4 is exposed has a clear view across the top part of the bumper or fender 50, to a closed position, as shown in dotted lines 54 in Figure 8, in which the cover 53 extends in front of and above the lens to cover and protect the lens 4.

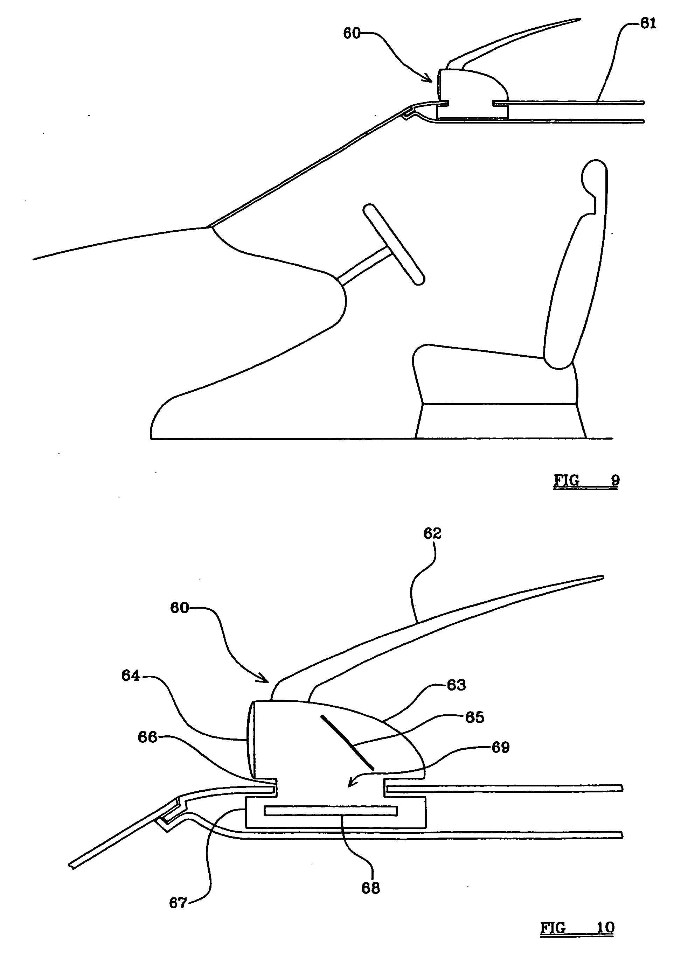

Reference is now made to Figures 9 and 10 of the accompanying drawings in which an aerial unit 60 is shown mounted on the roof 61 of a motor vehicle. The aerial unit 60 incorporates an aerial or antenna 62 mounted on an upper housing 63. The front part of the upper housing 63 is provided with a lens 64, similar to the lens 4 of the camera described above, the lens 64 having an optical axis aligned with a beam deflector 65 contained within the upper housing 63. The upper housing 63 is connected by means of a neck 66 which extends from the lower part of the upper housing 63, to a lower housing 67. Contained within the lower housing 67 is an image detector 68, corresponding to the image detector 11 described above. The beam deflector 65 deflects the beam entering the camera through the lens 4 by approximately 90° so that the deflected beam impinges on the image detector 68. Thus the upper housing 63 and the lower housing 67 together constitute a camera which is, effectively, of the same operative design as the camera 1 described above. It is to be noted that the camera of the embodiments of Figures 9 and 10 is mounted in position with the neck 66 passing through an aperture 69 formed in the roof sheet of the vehicle. Thus the lower housing 67, containing the sensor 68, is mounted within the envelope of the vehicle. The lower housing 67 is larger than the aperture 69, and so the aerial unit 60 cannot easily be removed from the vehicle.

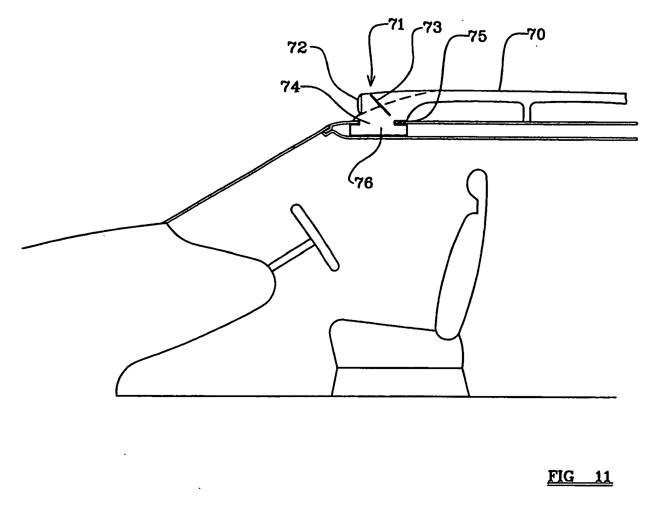

Figure 11 illustrates a further embodiment of the invention in which a camera is incorporated within a roof rail of the motor vehicle. Referring to Figure 11, a roof rail 70 of a motor vehicle has, at its forward-most end, a chamber 71, the front part of the chamber being provided with a lens 72. The lens 72 corresponds with the lens 4 as described above. Contained within the chamber 71 in alignment with the optical axis of the lens 4 is a beam deflector constituted, in this embodiment, by an inclined mirror 73. The lower part of the chamber 71 is connected, by means of a relatively narrow neck 74 of elongate form which passes through an aperture 75 formed in the roof of the vehicle, the neck 74 terminating in an enlarged lower housing 76 which contains an infra-red sensor of the type described above. The beam entering the camera through the lens 72 is focussed onto the infra-red sensor. It is to be appreciated that in this embodiment the housing containing the sensor is within the envelope of the vehicle.

In all of the described embodiments of the invention, a heater may be provided to heat the lens of the camera to minimise or obviate condensation on the lens. The heater may be an electric heater or may be means to direct heated air from the vehicle heating system on to the lens.

In the present Specification "comprise" means "includes or consists of" and "comprising" means "including or consisting of".

## Claims

1. A night vision arrangement on a vehicle, the night vision arrangement incorporating a camera (1), the camera comprising a lens (4), and an infra-red sensor (11) to capture an image received through the lens (4), there being a display unit (13) to display the captured image to a driver of the vehicle, **characterised in that** the lens (4) defines an optical axis, and within the camera (1) a beam deflector (6) is provided in alignment with the optical axis adapted to deflect the beam received through the lens (4) and to direct the deflected beam (4) on to the infra-red sensor (11), part of the camera (1) containing the sensor (11) being mounted within the main envelope of the vehicle, with the lens (4) when in an operative position being positioned beyond said envelope.

2. An arrangement according to Claim 1 wherein the beam deflector (6) is adapted to deflect the beam through approximately 90°.

3. An arrangement according to Claim 1 or Claim 2 wherein the beam deflector (6) comprises a mirror (7).

4. An arrangement according to any one of the preceding Claims wherein means are provided to heat the lens (4) of the camera (1).

5. An arrangement according to any one of the preceding Claims wherein means are provided to protect the lens (4) from the environment.

6. An arrangement according to Claim 5 wherein the means provided to protect the lens (4) from the environment comprise a cover movable to a position in which the lens (4) is covered.

7. An arrangement according to Claim 5 wherein the means to protect the lens (4) comprise means to move the camera (1) and the lens (4) so that the lens (4) is in a retracted and protected position.

8. An arrangement according to Claim 7 wherein the camera (1) is mounted in position for pivotal movement about a horizontal axis (21) parallel with the axis of the vehicle between an operative position and a retracted position.

9. An arrangement according to any one of Claim 1 to 7 wherein the camera (1) is incorporated into a mirror housing (30).

10. An arrangement according to any one of Claims 1 to 7 wherein the camera (1) is mounted in a fender or bumper (40).

11. An arrangement according to Claim 10 wherein the camera (1) is mounted to be moved vertically between an operative position and a retracted position (43).

12. An arrangement according to Claim 10 in which the camera (1) is provided with a cover (53) movable between a retracted position in which the lens (4) is exposed and a closed position (54) in which the lens (4) is covered.

13. An arrangement according to any one of Claims 1 to 7 wherein the camera (1) is adapted to be mounted on the roof (61) of a vehicle.

14. An arrangement according to Claim 13 wherein the camera (1) is incorporated in a roof mounted aerial (60).

15. An arrangement according to Claim 13 wherein the camera (1) is incorporated in a roof rail (70).

16. An arrangement according to any preceding claim, wherein the camera (1) is mounted on the vehicle to view the roadway in front of the vehicle.

17. An arrangement according to any preceding claim, wherein a processing unit (2) is provided which is configured to process a video signal generated by the infra-red sensor (11) and to pass the processed video signal to the display unit (3).

18. An arrangement according to any preceding claim, wherein the lens (4) is mounted on an elongated neck portion (8) of the arrangement.

## Patentansprüche

1. Nachtsichtvorrichtung an einem Fahrzeug, wobei die Nachtsichtvorrichtung umfasst: eine Kamera (1), wobei die Kamera eine Linse (4), und einen infrarotsensor (11) zur Erfassung eines Bildes, das über die Linse (4) empfangen wird umfasst, wobei eine Anzeigeeinheit (13) vorhanden ist, um das erfasste Bild einem Fahrer des Fahrzeugs anzuzeigen, **dadurch gekennzeichnet, dass** die Linse (4) eine optische Achse ausbildet, und innerhalb der Kamera (1) ein Strahldeflektor (6) vorgesehen ist, der mit der optischen Achse ausgerichtet und so angepasst ist, dass er den Strahl, der über die Linse (4) empfangen wird, ablenkt und den abgelenkten Strahl (4) zu dem Infrarotsensor (11) leitet, wobei ein Teil der Kamera (1), der den Sensor (11) enthält, in der Haupthülle des Fahrzeugs montiert ist, wobei die Linse (4), wenn sie sich in einer Betriebsposition befindet, über besagte Hülle hinaus positioniert ist.

2. Vorrichtung nach Anspruch 1, bei welcher der Strahldeflektor (6) so angepasst ist, dass er den Strahl in einem Winkel von etwa 90° ablenkt.

3. Vorrichtung nach Anspruch 1 oder Anspruch 2, bei welcher der Strahldeflektor (6) einen Spiegel (7) umfasst.

4. Vorrichtung nach einem der vorhergehenden Anspruche, bei welcher Mittel zur Erwärmung der Linse (4) der Kamera (1) vorgesehen sind.

5. Vorrichtung nach einem der vorhergehenden Ansprüche, bei welcher Mittel zum Schutz der Linse (4) vor der Umgebung vorgesehen sind.

6. Vorrichtung nach Anspruch 5, bei welcher die zum Schutz der Linse (4) vor der Umgebung vorgesehenen Mittel eine Abdeckung umfassen, die in eine die Linse (4) abdeckende Position bewegt werden kann.

7. Vorrichtung nach Anspruch 5, bei weicher das Mittel zum Schutz der Linse (4) Mittel umfasst, um die Kamera (1) und die Linse (4) so zu bewegen, dass sich die Linse (4) in einer zurückgezogenen und geschützten Position befindet.

8. Vorrichtung nach Anspruch 7, bei welcher die Kamera (1) in einer Position für eine Schwenkbewegung um eine horizontale Achse (21), die parallel zu der Achse des Fahrzeugs verläuft, zwischen einer Betriebsposition und einer zurückgezogenen Position montiert ist.

9. Vorrichtung nach einem der Ansprüche 1 bis 7, bei welcher die Kamera (1) in ein Spiegelgehäuse (30) integriert ist.

10. Vorrichtung nach einem der Ansprüche 1 bis 7, bei welcher die Kamera (1) in ein Schutzblech oder einen Stoßfänger (40) integriert ist.

11. Vorrichtung nach Anspruch 10, bei welcher die Kamera (1) so montiert ist, dass sie vertikal zwischen einer Betriebsposition und einer zurückgezogenen Position (43) bewegbar ist.

12. Vorrichtung nach Anspruch 10, in der die Kamera (1) mit einer Abdeckung (53) versehen ist, die zwischen einer zurückgezogenen Position, in der die Linse (4) ungeschützt ist, und einer geschlossenen Position (54), in der die Linse (4) abgedeckt ist, bewegbar ist.

13. Vorrichtung nach einem der Ansprüche 1 bis 7, bei welcher die Kamera (1) für die Montage auf dem Dach (61) eines Fahrzeugs eingerichtet ist.

14. Vorrichtung nach Anspruch 13, bei welcher die Kamera (1) in eine auf dem Dach montierte Antenne (60) integriert ist.

15. Vorrichtung nach Anspruch 13, bei welcher die Kamera (1) in eine Dachschiene (70) integriert ist.

16. Vorrichtung nach einem der vorhergehenden Ansprüche, bei welcher die Kamera (1) so auf dem Fahrzeug montiert ist, dass sie die Straße vor dem Fahrzeug einsieht.

17. Vorrichtung nach einem der vorhergehenden Ansprüche, bei welcher eine Prozessoreinheit (2) vorgesehen ist, die so konfiguriert ist, dass sie ein Videosignal, das von dem Infrarotsensor (11) erzeugt wird, verarbeitet und das verarbeitete Videosignal an die Anzeigeeinheit (3) weiterleitet.

18. Vorrichtung nach einem der vorhergehenden Ansprüche, bei welcher die Linse (4) auf einem lang gestreckten Halsabschnitt (8) der Vorrichtung montiert ist.

## Revendications

1. Arrangement de vision nocturne sur un véhicule, l'arrangement de vision nocturne incorporant un appareil photographique (1), l'appareil photographique comprenant une lentille (4), et un détecteur infrarouge (11) pour capter une image reçue à travers la lentille (4), une unité d'affichage (13) pour afficher l'image captée à un conducteur du véhicule existant, **caractérisé en ce que** la lentille (4) définit un axe optique et **en ce que**, au sein de l'appareil photographique (1), on prévoit un déflecteur de faisceau (6) en alignement avec l'axe optique adapté à infléchir le faisceau reçu à travers la lentille (4) et à diriger le faisceau défléchi (4) sur le détecteur infrarouge (11), la partie de l'appareil photographique (1) contenant le détecteur infrarouge (11) étant montée au sein de l'enveloppe principale du véhicule, la lentille (4), lorsqu'elle se trouve en position de fonctionnement, étant positionnée au-delà de ladite enveloppe.

2. Arrangement selon la revendication 1, dans lequel le déflecteur de faisceau (6) est adapté à la déflexion du faisceau par approximativement 90°.

3. Arrangement selon la revendication 1 ou la revendication 2, dans lequel le déflecteur de faisceau (6) comprend un miroir (7).

4. Arrangement selon l'une quelconque des revendications précédentes, dans lequel des moyens sont prévus pour chauffer la lentille (4) de l'appareil photographique (1).

5. Arrangement selon l'une quelconque des revendications précédentes, dans lequel des moyens sont prévus pour protéger la lentille (4) de l'environnement.

6. Arrangement selon la revendication 5, dans lequel les moyens prévus pour protéger la lentille (4) de l'environnement comprennent un couvercle déplaçable vers une position dans laquelle la lentille (4) est couverte.

7. Arrangement selon la revendication 5, dans lequel les moyens pour protéger la lentille (4) de l'environnement comprennent des moyens de déplacement de l'appareil photographique (1) et de la lentille (4), de telle sorte que la lentille (4) soit dans une position rétractée et protégée.

8. Arrangement selon la revendication 7, dans lequel l'appareil photographique (1) est monté en position en vue d'un mouvement de pivotement autour d'un axe horizontal (21), parallèle à l'axe du véhicule entre une position de fonctionnement et une position rétractée.

9. Arrangement selon l'une quelconque des revendications 1 à 7, dans lequel l'appareil photographique (1) est incorporé dans un boîtier de miroir (30).

10. Arrangement selon l'une quelconque des revendications 1 à 7, dans lequel l'appareil photographique (1) est monté sur un pare-chocs (40).

11. Arrangement selon la revendication 10, dans lequel l'appareil photographique (1) est monté verticalement entre une position de fonctionnement et une position rétractée.

12. Arrangement selon la revendication 10, dans lequel l'appareil photographique (1) est pourvu d'un couvercle (53) déplaçable entre une position rétractée dans laquelle la lentille (4) est exposée et une position fermée (54) dans laquelle la lentille (4) est couverte.

13. Arrangement selon l'une quelconque des revendications 1 à 7, dans lequel l'appareil photographique (1) est adapté à un montage sur le toit (61) du véhicule.

14. Arrangement selon la revendication 13, dans lequel l'appareil photographique (1) est incorporé dans une antenne montée sur le toit (60) .

15. Arrangement selon la revendication 13, dans lequel l'appareil photographique (1) est incorporé dans un longeron de toit (70).

16. Arrangement selon l'une quelconque des revendications précédentes, dans lequel l'appareil photographique (1) est monté sur le véhicule pour visualiser la route à l'avant du véhicule.

17. Arrangement selon l'une quelconque des revendications précédentes, dans lequel on prévoit une unité de traitement qui est configurée pour traiter un signal vidéo engendré par le détecteur infrarouge (11) et pour passer le signal vidéo traité à l'unité d'affichage (3).

18. Arrangement selon l'une quelconque des revendications précédentes, dans lequel la lentille (4) est montée sur une portion de col allongé (8) de l'arrangement.
